(19) Europäisches Patentamt

European Patent Office

Office européen des brevets

(11) **EP 0 656 710 B1**

(12) **FASCICULE DE BREVET EUROPEEN**

(45) Date de publication et mention
de la délivrance du brevet:
**19.04.2006 Bulletin 2006/16**

(51) Int Cl.:
***H04L 9/32*** *(2006.01)*

(21) Numéro de dépôt: **94402713.5**

(22) Date de dépôt: **28.11.1994**

(54) **Procédé de génération de signatures DSA avec des appareils portables à bas coûts**

Verfahren zur Erzeugung von DSA-Unterschriften mit preisgünstigen tragbaren Einheiten

Method for generating DSA dignatures with low cost portable devices

(84) Etats contractants désignés:
**DE ES GB IT NL**

(30) Priorité: **02.12.1993 FR 9314466
29.03.1994 FR 9403697**

(43) Date de publication de la demande:
**07.06.1995 Bulletin 1995/23**

(73) Titulaire: **GEMPLUS
13881 Gémenos Cédex (FR)**

(72) Inventeurs:
• **M'Raihi, David**
 **F-94230 Cachan (FR)**
• **Naccache, David**
 **F-94230 Cachan (FR)**

(74) Mandataire: **Bentz, Jean-Paul
Novagraaf Technologies,
122, rue Edouard Vaillant
92593 Levallois-Perret Cedex (FR)**

(56) Documents cités:
**WO-A-93/03562**

• **JOURNAL OF CRYPTOLOGY, vol.4, no.3, 1991, US pages 161 - 174 C.P.SCHNORR 'EFFICIENT SIGNATURE GENERATION BY SMART CARDS'**
• **NTT REVIEW, vol.5, no.1, Janvier 1993, TOKYO JP pages 75 - 81, XP338580 T.OKAMOTO & E.FUJISAKI 'ON COMPARISON OF PRACTICAL DIGITAL SIGNATURE SCHEMES'**
• **BYTE, vol.18, no.12, Novembre 1993, ST PETERBOROUGH US pages 309 - 312, XP408896 B.SCHNEIER 'DIGITAL SIGNATURES'**
• **ELECTRONICS LETTERS, vol.29, no.12, 10 Juin 1993, STEVENAGE GB pages 1120 - 1121, XP373185 S.-M.YEN & C.-S.LAIH 'NEW DIGITAL SIGNATURE SCHEME BASED ON DISCRETE LOGARITHM'**

**Description**

La présente invention concerne un procédé permettant de faciliter la génération numérique de signatures de type DSA (Digital Signature Algorithm, proposé par le *US National Institute of Standards and Technology* (A Proposed Federal Information Processing Standard for Digital Signature Standard (DSS), Annoncé au Registre Fédéral le 30 août 1991, pp 42980-42982) par des appareils portables, notamment des cartes à microprocesseur dépourvues de ressources matérielles permettant de réaliser des opérations arithmétiques sur des grands nombres.

Malgré une diffusion généralisée et une bonne acceptation du concept de carte à puce de la part du public, la plupart des applications pratiques sont apparues seulement voici quelques années principalement à cause des limitations de la puissance de calcul des cartes. Les progrès en matière de capacité de stockage non volatile des informations, la sécurité et la technologie des circuits (par exemple l'EEPROM) encouragent l'émergence rapide de nouvelles générations de cartes et d'applications' de plus en plus ambitieuses telles que le nouveau standard de signature numérique Américain (DSA).

Le Standard de Signature Numérique (DSA, dont on peut trouver une description dans la demande de brevet américain n°07/738.431 intitulée "Digital Signature Algorithm") a été proposé par le *US National Institute of Standards and Technology* afin de fournir une base appropriée pour des applications requérant des signatures numériques au lieu de signatures classiques. Une signature DSA est une paire de grands nombres représentés dans un ordinateur par des chaînes de chiffres binaires. La signature numérique est calculée à l'aide d'une série de règles de calcul (le DSA) et un ensemble de paramètres d'une façon permettant de certifier à la fois l'identité du signataire et l'intégrité des données. Le DSA permet de générer et vérifier des signatures.

Le procédé de génération de signatures fait usage d'une clé privée afin de produire une signature numérique. Le procédé de vérification utilise une clé publique qui correspond à la clé secrète sans toutefois lui être identique. Chaque utilisateur possède une paire de clés (publique, secrète). On suppose que les clés publiques sont connues de tous alors que les clés secrètes ne sont jamais dévoilées. Toute personne a la capacité de vérifier la signature d'un utilisateur en utilisant sa clé publique mais des signatures ne peuvent être générées autrement qu'en utilisant la clé secrète de l'utilisateur.

On rappelle que les paramètres de l'algorithme DSA sont :

&#9312; Un module premier p tel que
$2^{L-1} < p < 2^L$ pour $512 \leq L \leq 1024$ et $L = 64 \alpha$ pour un a quelconque.

&#9313; Un module premier q tel que
$2^{159} < q < 2^{160}$ et p-1 est un multiple de q.

&#9314; Un nombre g, d'ordre q modulo p tel que $g = h^{\frac{p-1}{q}} \bmod p,$ où h est un entier quelconque vérifiant 1 < h < p-1 et $g = h^{\frac{p-1}{q}} \bmod p > 1.$

&#9315; Un nombre x, généré aléatoirement ou pseudo aléatoirement.

&#9316; Un nombre y défini par la relation : $y = g^x \bmod p$.

&#9317; Un nombre k généré aléatoirement ou pseudo aléatoirement tel que 0 < k < q.

Les entiers p, q et g sont des paramètres données du système pouvant être publiés et/ou partagés par un groupe d'utilisateurs. Les clés, secrète et publique, d'un signataire sont respectivement x et y. Les paramètres x et k sont utilisés pour la génération de la signature et doivent être gardées secrets. Le paramètre k doit être régénéré pour chaque signature.

Afin de signer un message m (valeur hachée d'un fichier initial M), le signataire calcule la signature {r, s} par :

$$r = \left( g^k \bmod p \right) \bmod q \quad \text{et} \quad s = \frac{m + xr}{k} \bmod q$$

Où la division par k s'entend modulo q (i.e. 1/k est le nombre k' tel que k k' $\equiv$ 1 mod q).

Par exemple, si q=5 et k=3 alors $\frac{1}{k} = 2$ car $3 \times 2 = 6 \equiv 1$ mod 5.

Après avoir testé que r $\neq$ 0 $\neq$ s, comme expliqué dans la description du DSA, la signature {r, s} est envoyée au vérifieur qui calcule :

① $w = \dfrac{1}{s} \bmod q$

② $u_1 = m\, w \bmod q$

③ $u_2 = r\, w \bmod q$

④

$$v = \left( g^{u_1}\, y^{u_2} \bmod p \right) \bmod q$$

⑤ Et compare si v et r sont égaux afin d'accepter ou rejeter la signature.

La présente invention s'applique à tout appareil portable comportant des moyens de calculs et des moyens de mémorisation, elle s'applique notamment à des cartes à puce à microprocesseur. Elle s'applique par conséquent aux cartes répondant à la norme PCMCIA, aux cartes badge, aux cartes à lecture sans contact.

Les contraintes économiques liées au marché de la carte à puce, entraînent une recherche constante en vue d'en améliorer les coûts de revient. Cet effort passe souvent par l'utilisation de produits les plus simples possibles. Cet état de fait induit un intérêt sans cesse grandissant pour des solutions permettant d'implémenter des algorithmes à clef publique sur des micro contrôleurs peu chers de type 8 bits, à coeur de 8051 (Intel) ou 6805 (Motorola) par exemple.

Afin d'atteindre ce but dans le cadre de l'implémentation de l'algorithme de signature numérique DSA, l'invention proposée introduit le concept des *coupons de signatures.* Il s'agit d'un ensemble de certificats pré-calculés. Ces coupons sont fournis par un centre certifié (autorité) au cours d'une phase préliminaire de communication *on-line*.

Le principal avantage des coupons de signature en regard des propositions précédentes en matière de signature numérique réside dans la vitesse de calcul d'une signature de type DSA par une carte basée sur un simple micro contrôleur 8 bits (aux alentours de 300ms, temps de transmission compris) et le faible taux d'occupation mémoire du coupon (seulement 28 octets en EPROM ou EEPROM et voire 20 octets pour des variantes du procédé décrites dans la suite.

On pourra se reporter au document le plus proche constitué pour D1 : JOURNAL of CRYPTOLOGY, vol.4, no. 3, 1991, USpages 161-174 C.P.SCHNDR "EFFICIENT SIGNATURE GENERATION BY SMART CARDS".

La présente invention a plus particulièrement pour objet un procédé de génération de signatures numériques selon la revendication 1.

Le procédé de génération des signatures DSA se décompose en deux phases distinctes : le chargement du coupon dans la mémoire et l'utilisation du coupon par l'appareil portable. On parlera dans la suite, pour simplifier de cartes à circuit intégré pour désigner un appareil portable et on utilisera le néologisme "expanser" comme synonyme de "produire une expansion de".

Selon un premier mode de réalisation, les coupons sont obtenus par une autorité centrale certifiée B ayant des moyens de calculs et établissant périodiquement des sessions individuelles avec les appareils Ai, par le biais d'une interface de communication commune, afin d'envoyer à chaque appareil les données chiffrées et pre-calculées qui permettront à l'appareil de générer une signature numérique lors d'une session d'authentification mettant en oeuvre un protocole à clé publique.

Ainsi afin de générer et de charger un coupon, l'autorité et la carte réalisent les actions suivantes :

① L'autorité tire un nombre aléatoire J de Z1 octets (en pratique Z1 sera inférieur ou égal à 20 octets. On a choisi de manière préférée Z1 = 8).

② L'autorité expanse J afin d'obtenir un nombre i de Z2 octets, Z2 étant supérieur ou égal à Z1 (on a choisi de manière préférée Z2 = 20)

③ L'autorité calcule c = DES(clé_carte, J)

④ L'autorité calcule à rebours $k = \dfrac{1}{i} \bmod q$

⑤ L' autorité calcule $r = \left( g^k \bmod p \right) \bmod q$

⑥ L'autorité envoie c et r à la carte

⑦ La carte calcule $J = DES^{-1}(clé\_carte, c)$

⑧ La carte enregistre J et r en EPROM (ou EEPROM)

Quand la carte désire signer un message m (utilisation d'un coupon pour signer un message), le protocole suivant est utilisé :

① La carte extrait J et r de l'EPROM (ou EEPROM)

② La carte expanse J pour obtenir i sur Z2 octets

③ La carte reçoit le message m de la part du vérifieur

④ La carte calcule $s = (m + x\,r)\,i \bmod q$

⑤ La carte envoie s et r au vérifieur et invalide le couple {r, J} en l'effaçant de l'EEPROM

Dans le mode de réalisation qui vient d'être donnée; la clef DES clé_carte peut-être une partie de x.

Par ailleurs, étant donné que le nombre J ne sortira jamais en clair de la carte, un procédé rudimentaire de chiffrement consistant en un simple ou exclusif de J avec une clé constante peut remplacer le DES.

On peut remarquer par conséquent que l'emploi de coupons de signature se révèle avantageux et, dans les cas où une carte entre régulièrement en contact avec une autorité distante et certifiée, la carte peut être rechargée.

Selon un deuxième mode de réalisation, la génération du nombre aléatoire est opérée par la carte, ce qui permet d'éviter le chiffrement pour la transmission de J. Le calcul de l'inverse est fait en hachant à l'aide de la fonction SHA (Secure Hash Algorithm - FIPS PUB XX, February 1, 1993, *Digital Signature Standard),* un message composé de la clé secrète x de la carte et du nombre aléatoire J. Le chargement et l'utilisation d'un coupon s'en retrouvent ainsi simplifiés.

Ainsi pour générer et charger un coupon, l'autorité et la carte réalisent les étapes suivantes :

① La carte tire un nombre aléatoire J de Z1 octets (de préférence 10 octets)

② La carte envoie J à l'autorité.

③ L'autorité calcule $k = \dfrac{1}{SHA(x,\ J)} \bmod q$

④ L'autorité calcule $r = \left(g^{k} \bmod p\right) \bmod q$

⑤ L'autorité envoie r à la carte

⑥ La carte enregistre J et r en EPROM (ou EEPROM)

Quand la carte désire signer un message m (utilisation d'un coupon pour signer un message), le protocole suivant est utilisé :

① La carte extrait J et r de l'EPROM (ou EEPROM)

② La carte reçoit le message m de la part du vérifieur

③ La carte calcule $s = (m + x\,r)\,SHA(x,\ J) \bmod q$

④ La carte envoie s et r au vérifieur et invalide le couple {r, J} en l'effaçant de l'EEPROM.

Selon un troisième mode de réalisation du procédé on réduit la taille des coupons en considérant le même nombre aléatoire J dans le calcul de l'ensemble des coupons. Pour cela on diversifie les $k_i$ en introduisant la notion de rang représenté par la variable i. L'autorité calcule donc les $k_i$ des n coupons en fonction de x, J et i. Cette méthode permet de ne charger dans la carte qu'une seule valeur J commune à l'ensemble des coupons qui ne font plus que 20 octets, taille de la valeur $r_i$ représentant le coupon.

Ainsi pour générer et charger des coupons, l'autorité et la carte réalisent les actions suivantes :

① La carte tire un nombre aléatoire J de Z1 octets (de préférence 10 octets ) et l'enregistre en EPROM (ou EEPROM)

② La carte envoie J à l'autorité

③ L'autorité calcule les $k_i$ pour i=1 à n, où n représente le nombre de coupons à charger, de la façon suivante :
Pour i = 1 à n :

$$k_i = \frac{1}{SHA(x,\ J,\ i)} \bmod q$$

④ L'autorité calcule les $r_i$ correspondant : $r_i = \left( g^{r'_i} \bmod p \right) \bmod q$

⑤ L'autorité envoie les $r_i$ à la carte
⑥ La carte enregistre les $r_i$ en EPROM (ou EEPROM)

Quand la carte désire signer un message m (utilisation d'un coupon pour signer un message), le protocole suivant est utilisé :

① La carte extrait J et un $r_i$ de l'EPROM (ou EEPROM)
② La carte reçoit le message m de la part du vérifieur
③ La carte calcule s = (m + x $r_i$) SHA(x, J, i) mod q
④ La carte envoie s et $r_i$ au vérifieur et invalide $r_i$ en l'effaçant de l'EEPROM

L'emploi de coupons de signature peut être étendu à une grande variété de cryptosystèmes de type DSA où le pré calcul est possible (Schnorr, Guillou-Quisquater, etc.).
On rappelle à ce propos que dans le schéma de signature proposé par C.P. Schnorr (Efficient Signature Génération by Smart Cards - C. P. Schnorr - Brevet Européen 89103290.6), le procédé de génération de signatures fait également usage d'une clé privée afin de produire une signature numérique. Le procédé de vérification utilise une clé publique qui correspond à la clé secrète sans toutefois lui être identique.
Chaque utilisateur possède donc une paire de clés (publique, secrète). On suppose que les clés publiques sont connues de tous alors que les clés secrètes ne sont jamais dévoilées. Toute personne a la capacité de vérifier la signature d'un utilisateur en utilisant sa clé publique mais des signatures ne peuvent être générées autrement qu'en utilisant la clé secrète de l'utilisateur.
On rappelle également que les paramètres du système Schnorr sont :

① Deux modules premiers p et q tels que q|p-1, q$\geq 2^{140}$, p$\geq 2^{512}$,
② Un nombre a d'ordre q modulo p, c'est à dire vérifiant $\alpha^q$ = 1(mod p), $\alpha \neq 1$
③ Une fonction de hachage à sens unique (par exemple la SHA)
④ Un nombre s, généré aléatoirement ou pseudo aléatoirement.
⑤ Un nombre v défini par la relation : v=$\alpha^{-s}$ mod p

Les entiers p, q et a sont des paramètres du système pouvant être publiés et/ou partagés par un groupe d'utilisateurs. Les clés, secrète et publique, d'un signataire sont respectivement s et v. Le paramètre s est utilisé pour la génération de la signature et doit être gardé secret.
Selon un quatrième mode de réalisation de l'invention la génération et le chargement d'un coupon s'opèrent alors de la façon suivante :

① La carte tire un nombre aléatoire J de Z1 octets (10 octets de préférenrence ) et l'enregistre en EPROM (ou EEPROM)
② La carte envoie J à l'autorité
③ L'autorité calcule les $x_i$ pour i = 1 à n, avec n le nombre de coupons à charger, de la façon suivante :
Pour i = 1 à n :

$$x_i = \alpha^{SHA(s, J, i) \bmod q} \bmod p$$

④ L'autorité envoie les $x_i$ à la carte
(5) La carte enregistre les $x_i$ en EPROM (ou EEPROM)

Quand la carte désire signer un message m, le protocole suivant est utilisé :

(1) La carte extrait J et un $x_i$ de l'EPROM (ou EEPROM)
(2) La carte reçoit le message m de la part du vérifieur
(3) La carte calcule e = SHA(m, s) mod q
④ La carte calcule y = SHA(s, J, i) + se mod q
④ La carte envoie $x_i$ et y au vérifieur et invalide le coupon {$x_i$} en l'effaçant de l'EEPROM.

Le procédé conforme à l'invention a également pour objet de réduire le temps nécessaire pour la génération d'une signature. Selon un mode de réalisation préféré, on utilise pour cela une carte pourvue d'un opérateur cryptographique (par exemple, du type 83C852 Philips), et on repousse le calcul du terme $r = \left( g^k \bmod p \right) \bmod q$ au moment de la vérification afin de pouvoir profiter du temps de travail du vérifieur.

Dans ce protocole, la carte recalcule elle-même son coupon {r, k} pendant la vérification. Le premier coupon est chargé dans la carte lors de la phase de personnalisation. Le coupon doit être écrit dans une zone protégée en lecture et écriture afin de s'assurer de la sécurité du système.

Ainsi,

① La carte extrait r et k de l'EEPROM (ou EPROM)

② La carte reçoit le message m de la part du vérifieur

③ La carte calcule $s = \dfrac{m + xr}{k} \bmod q$

④ La carte envoie r et s au vérifieur et invalide r en l'effaçant de l'EEPROM

⑤ Pendant que le vérifieur vérifie la validité du couple {r, s}, la carte tire un nouveau nombre aléatoire k de 20 octets et calcule à rebours, calcule $r = \left( g^k \bmod p \right) \bmod q$ et réécrit le nouveau coupon {r, k} en EPROM (ou EEPROM).

Le procédé conforme à l'invention a également pour objet de proposer un moyen de chargement rapide et simultané de n coupons.

Dans le cas où l'autorité génère les nombres aléatoires J, le procédé comporte alors les étapes suivantes :

① L'autorité calcule pour b = 1 à n :

$J_b$ = nombre aléatoire de Z1 octets
$i_b$ = expanse($J_b$)

$$k_b = \frac{1}{i_b} \bmod q$$

$R_b = 1$

② L'autorité calcule :

Acc = g
Pour a = 0 à 159 faire
{
Pour b = 1 à n faire si $k_b$ [a]==1 alors $R_b = R_b$ Acc modq
Acc = Acc$^2$ mod p
}
Pour b = 1 à n : coupon$_b$ = {$R_b$ mod q, $J_b$}

③ L'autorité envoie les n coupons à la carte.

L'invention a pour quatrième objet de proposer un moyen de chargement rapide et simultané de n coupons par l'autorité dans le cas où la carte génère le nombre aléatoire J :

① La carte génère un nombre aléatoire J, l'enregistre en EPROM (ou EEPROM) et l'envoie à l'autorité

② L'autorité calcule pour b = 1 à n :

$$k_b = \frac{1}{SHA(x, J, b)} \bmod q$$

$R_b = 1$
③ L'autorité calcule :

```
Acc = g
Pour a = 0 à 159 faire
}
```

Pour b = 1 à n faire si $k_b[a]==1$ alors $R_b = R_b$ Acc mod q

Acc = $Acc^2$ mod p

```
}
```

Pour b = 1 à n : $r_b = R_b$ mod q

④ L'autorité envoie les valeurs $r_b$ des n coupons à la carte qui les enregistre en EPROM (ou EEPROM) à la suite de J.

Cette méthode de chargement rapide de n coupons peut bien évidemment être étendu à tous les types de coupon (Schnorr, Guillou-Quisquater, etc.).

L'invention a également pour objet de proposer une méthode permettant de limiter l'utilisation des coupons à l'intérieur d'une zone géographique et/ou dans un laps de temps donné.

L'autorité génère une signature DSS qui servira de certificat à un ensemble de coupons. Cette signature est vérifiée par le terminal lors de l'utilisation du coupon afin de s'assurer que les coupons peuvent bien être utilisé dans ce cadre.

Soit un ensemble de n coupons. Le certificat leur correspondant est calculé par l'autorité au moment du chargement des coupons :(R,S) = $DSS_{AUTORITE}$ SHA(Donnée_Contrôle, $r_1$ .... $r_n$)).

Les données de contrôle peuvent être la concaténation de différentes informations comme une date limite et/ou un indicatif de zone géographique (code postal par exemple). Dans le cadre d'un système à n coupons de 20 octets, utilisant une valeur aléatoire commune J, le chargement et l'utilisation des coupons se déroulent ainsi :

① La carte tire un nombre aléatoire J de Z1 octets (10 octets) et l'enregistre en EPROM (ou EEPROM)

② La carte envoie J à l'autorité

③ L'autorité calcule les $k_i$ pour i=1 à n, avec n le nombre de coupons à charger, et les ri correspondant, de la façon suivante :

Pour i = 1 à n :

$$k_i = \frac{1}{SHA(x, J, i)} \ mod \ q$$

$$r_i = \left( g^{k_i} \ mod \ p \right) mod \ q$$

④ L'autorité calcule le Certificat (R,S) correspondant aux n coupons:

Soit X la clef secrète de l'autorité

① L'autorité génère un nombre aléatoire K

② M = Haché (Donnée_Contrôle, $r_1, r_2,...,r_n$)

③ R = ($g^k$ mod $p$) mod $q$

④

$$S = \frac{M + XR}{K} \ mod \ q$$

⑤ L'autorité envoie le Certificat (R,S), les données de contrôle Donnée_Contrôle et les $r_i$ à la carte ,

⑥ La carte enregistre le Certificat (R,S), les données de contrôle et les $r_i$ en mémoire non volatile EPROM (ou EEPROM)

Il est possible de limiter le nombre de données à envoyer en organisant les coupons en arbre binaire de façon connue par l'homme de l'art Le choix de la méthode de hachage par l'homme de l'art dépendra donc essentiellement de la façon dont il souhaite organiser les données et des gains possibles au niveau du rapport temps de transmission sur temps de calcul qu'il désire obtenir.

Quand la carte désire signer un message m, les étapes suivantes sont mises en oeuvre :

① La carte extrait J et un $r_i$ de l'EPROM (ou EEPROM)
② La carte reçoit le message m de la part du vérifieur
③ La carte calcule $s = (m + x\, r_i)\, SHA(x, J, i) \bmod q$
④ La carte envoie s, $r_i$, le Certificat et les données nécessaires à sa vérification au vérifieur et invalide $r_i$ en l'effaçant de l'EEPROM.

D'autres particularités et avantages de l'invention apparaîtront à la lecture de la description suivante qui est faite à titre d'exemple illustratif et non limitatif et en regard des dessins annexés sur lesquels :

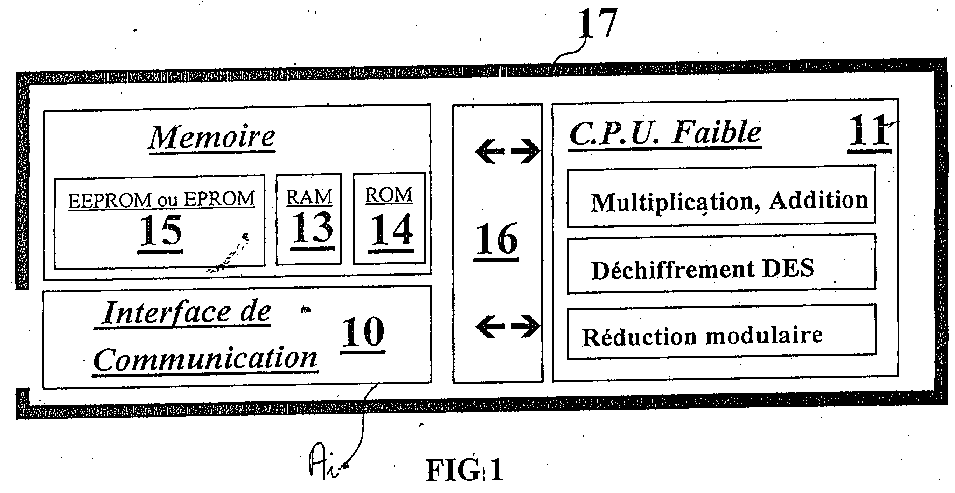

La **figure 1** représente le schéma d'un appareil Ai apte à mettre en oeuvre le système proposé par la présente invention.

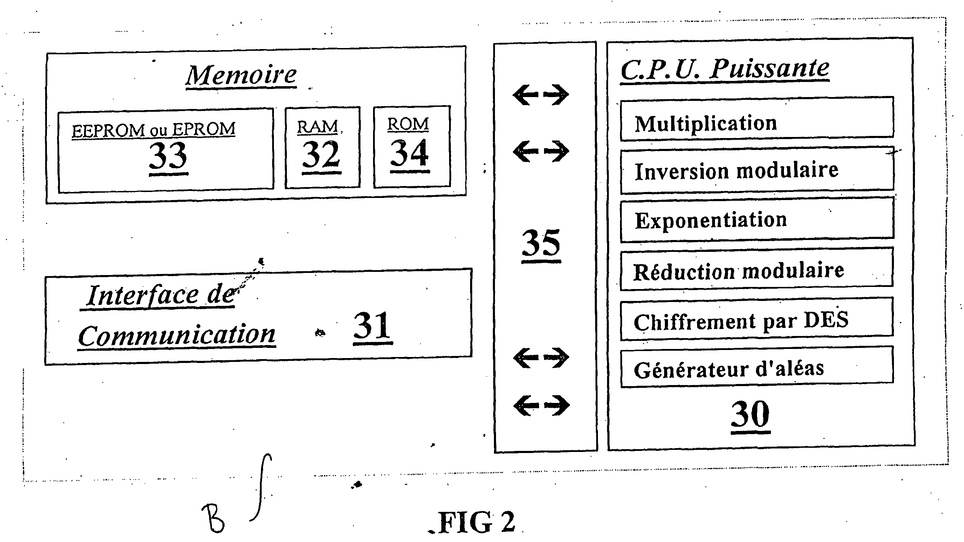

La **figure 2** représente le schéma d'une autorité certifiée apte à mettre en oeuvre le système proposé par la présente invention.

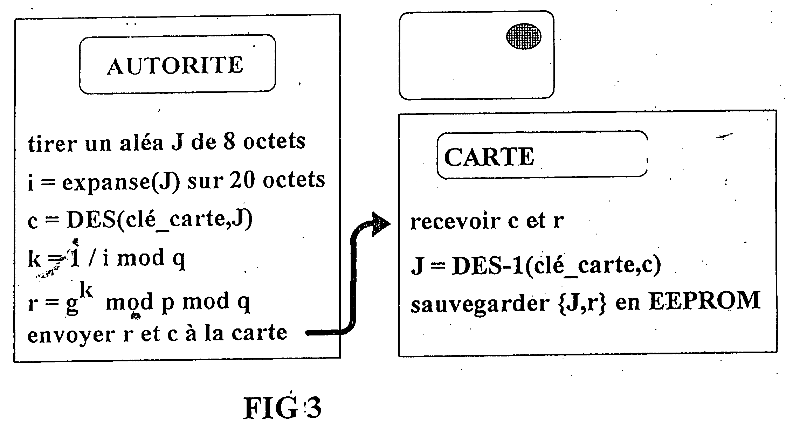

La **figure 3** représente les données transmises entre un appareil Ai tel qu'une carte à circuit intégré et l'autorité, pendant la phase de chargement d'un coupon dans le cas où l'autorité génère le nombre aléatoire.

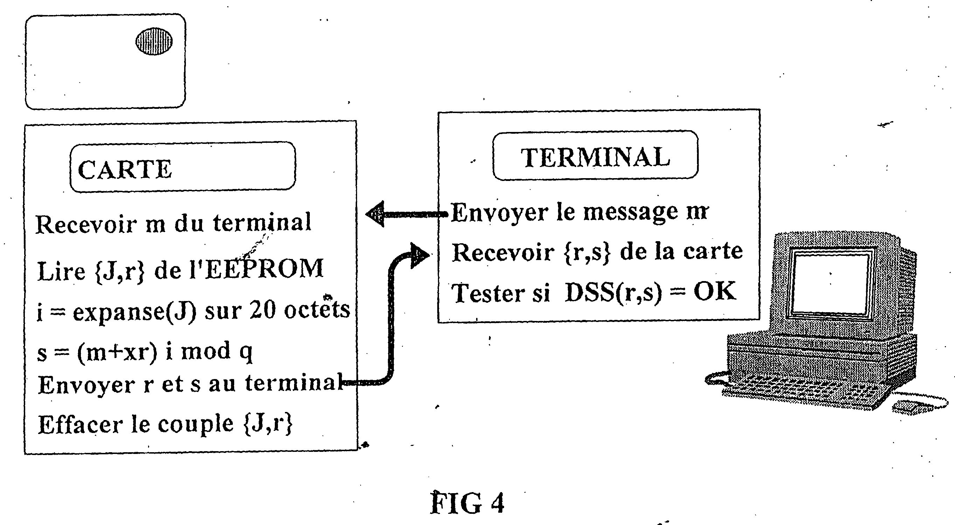

La **figure 4** décrit des données transmises entre la carte et le vérifieur au moment de l'utilisation du coupon dans le cas où l'autorité génère le nombre aléatoire.

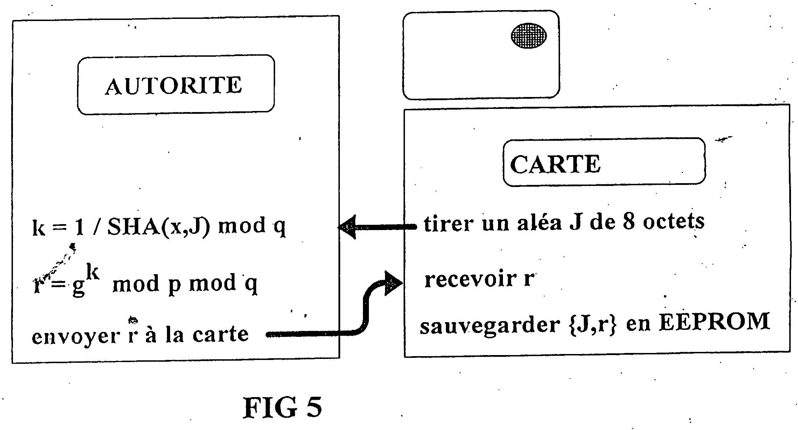

La **figure 5** représente les données transmises entre la carte et l'autorité pendant la phase de chargement d'un coupon dans le cas où la carte génère le nombre aléatoire.

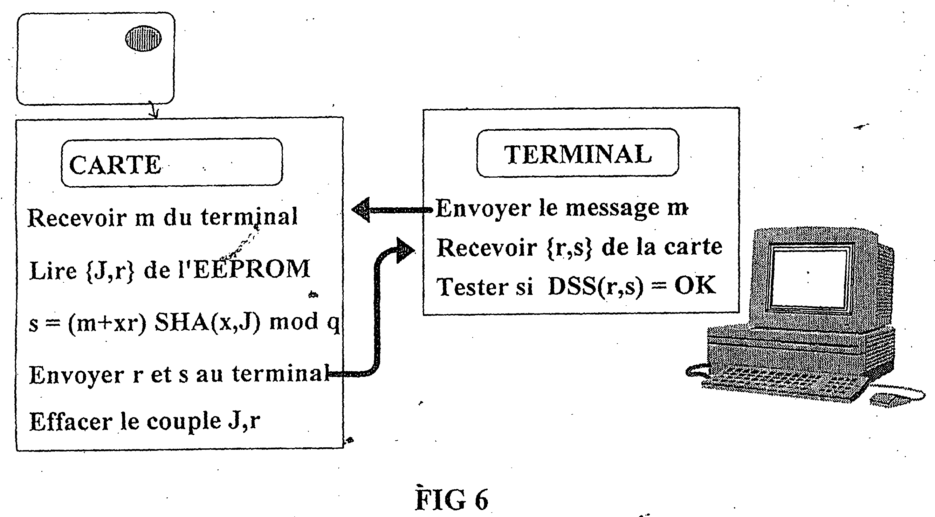

La **figure 6** décrit les données transmises entre la carte et le vérifieur au moment de l'utilisation du coupon dans le cas où la carte génère le nombre aléatoire.

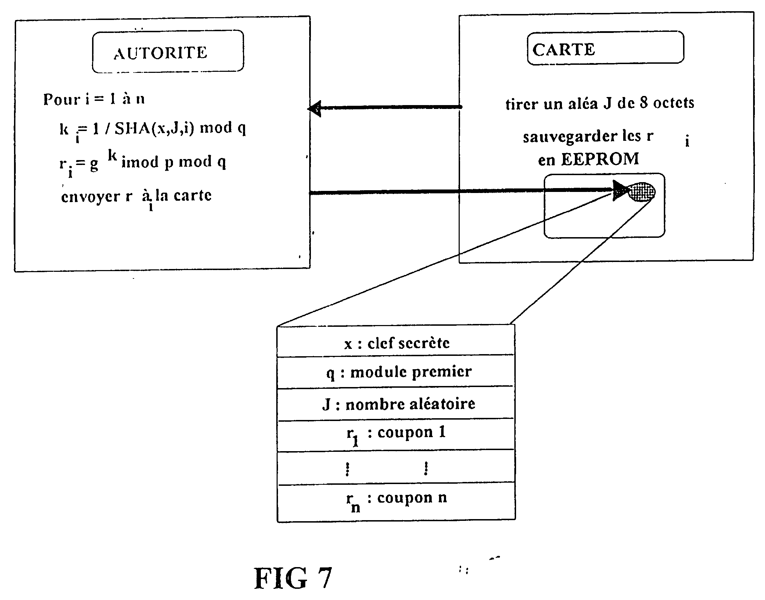

La **figure 7** décrit l'organisation de la mémoire d'une carie après le chargement de n coupons dans le cas général où la carte génère le nombre aléatoire.

Comme précisé au début de la description on parlera pour simplifier de carte à circuit intégré étant bien entendu qu'il peut s'agir de tout appareil portable possédant un microprocesseur, une interface de communication et des moyens de mémorisation.

Par ailleurs l'invention s'applique tout aussi bien à un système dans lequel une autorité délivre les coupons que dans le cas ou les cartes à circuit intégré possèdent un circuit opérateur cryptographique classique et sont par conséquent aptes à générer les coupons.

Selon l'invention proposée, chaque carte à circuit intégré se compose d'une unité de traitement (CPU) 11, d'une interface de communication 10, une mémoire vive (RAM) et/ou une mémoire non inscriptible (ROM) 14 et/ou une mémoire inscriptible (généralement ré inscriptible) (EPROM ou EEPROM) 15.

Le CPU 11 et/ou la ROM 14 de la carte contiennent les programmes ou les ressources de calcul correspondant à la seconde partie du protocole DSS Il s'agit de programmes mettant en oeuvre les règles de calcul pour la génération de s et d'utilisation de la fonction de hachage SHS, la multiplication, l'addition et la réduction modulaire. Certaines de ces opérations peuvent être regroupées (par exemple, la réduction modulaire peut-être directement intégrée dans la multiplication).

De même que pour l'implémentation du DSS, la mémoire RAM contient le message M sur lequel s'applique la fonction de hachage SHS et les règles de calcul pour la génération de signatures DSS. L'E(E)PROM 15 contient les paramètres p, q, g, x et le jeu de coupons $\{r_i, J_i\}$ généré et utilisé comme précisé dans la description qui suit.

La carte dispose de moyen de déchiffrement (par exemple le programme de l'algorithme DES) dont elle possède la clef secrète.

Le CPU 11 commande via les bus d'adresse et de données 16, l'interface de communication 10, les opérations de lecture et d'écriture mémoire 13, 14 et 15.

Chaque carte à puce est protégée du monde extérieur par des protections physiques 17. Ces protections devraient être suffisantes pour empêcher toute entité non autorisée d'obtenir la clef secrète x. Les techniques les plus utilisées de nos jours en la matière sont l'intégration de la puce dans un module de sécurité et l'équipement des puces de dispositifs capables de détecter des variations de température, de lumière ainsi que des tensions et des fréquences d'horloge anormales. Des techniques de conception particulières telles que l'embrouillage de l'accès mémoire sont également utilisées.

Selon l'invention proposée, l'autorité se compose au minimum d'une unité de traitement (CPU) 30 et de ressources mémoires 32,33 et 34.

Le CPU 30 commande, via les bus d'adresse et de données 35, l'interface de communication 31, les opérations de lecture et d'écriture mémoire 32, 33 et 34.

Le CPU 30 et/ou la ROM 34 de l'autorité contiennent les programmes ou les ressources de calcul permettant d'implémenter l'ensemble du protocole DSS (règles de calcul et fonction de hachage SHS), multiplication, addition, inverse modulaire, exponentiation et réduction modulaire. Certaines de ces opérations peuvent être regroupées (par exemple, la réduction modulaire peut-être directement intégrée dans la multiplication).

L'autorité dispose également de moyen de chiffrement (par exemple le programme de l'algorithme DES) dont elle possède la clef secrète. Dans le cas contraire, la génération des nombres aléatoires J est réalisée par la carte. L'autorité ou la carte disposent pour cela d'un générateur de nombre aléatoire.

Dans le cadre général de l'invention proposée et selon un premier mode de réalisation, le chargement à distance et l'utilisation des coupons sont réalisés en échangeant entre la carte, l'autorité et le vérifieur au moins les signaux suivants :

Afin de charger un coupon à distance, l'autorité tire un nombre aléatoire de Z1 octets J, l'expanse pour obtenir un nombre i de Z2 octets, calcule c = DES(clé_carte, J) et calcule à rebours $k = \dfrac{1}{i} \bmod q$ .

Par la suite, l'autorité calcule $r = \left( g^k \bmod p \right) \bmod q$, envoie c et r à la carte qui calcule alors J = DES$^{-1}$ (clé_carte, c) et enregistre J et r dans l'E(E)PROM.

De façon préférentielle Z1=8 et Z2=20.

Quand la carte désire signer un message m, elle extrait J et r de l'E(E)PROM, expanse J pour obtenir un nombre i de 20 octets et calcule s = (m + x r) i mod q.

Par la suite, la signature {r, s} est envoyée au vérifieur et le couple {r, J} est invalidé (effacé de l'EEPROM).

Selon un deuxième mode de réalisation on déplace la génération du nombre aléatoire J au niveau de la carte. Le chargement à distance et l'utilisation des coupons sont réalisés en échangeant entre la carte, l'autorité et le vérifieur au moins les signaux suivants :

Afin de charger un coupon à distance, la carte tire un nombre aléatoire de 18 octets J, et l'envoie à l'autorité.

Par la suite, l'autorité calcule à rebours $k = \dfrac{1}{SHA(x,J)} \bmod q$ et $r = \left( g^k \bmod p \right) \bmod q$, envoie r à la carte qui enregistre J et r dans l'E(E)PROM.

Quand la carte désire signer un message m, elle extrait J et r de l'E(E)PROM et calcule la seconde partie de la signature : s = (m + x r) SHA(x,J) mod q.

Par la suite, la signature {r, s} est envoyée au vérifieur et le couple {r, J} est invalidé (effacé de l'EEPROM).

Selon une variante d'exécution, dans le cas où une carte pourvue d'un opérateur cryptographique (par exemple, du type 83C852 Philips) et où par conséquent elle est apte à générer les coupons on réduit le temps nécessaire pour la génération d'une signature DSS en repoussant le calcul du terme $r = \left( g^k \bmod p \right) \bmod q$ au moment de la vérification afin de pouvoir profiter du temps de travail du vérifieur.

Dans ce protocole, la carte recalcule elle-même son coupon pendant la vérification.

① La carte extrait r et k de l'EEPROM (ou EPROM)

② La carte reçoit le message m de la part du vérifieur

③ La carte calcule $s = \dfrac{m + xr}{k} \bmod q$

④ La carte envoie r et s au vérifieur et invalide r en l'effaçant de l'EEPROM

⑤ Pendant que le vérifieur vérifie la validité du couple {r, s}, la carte tire un nouveau nombre aléatoire k de 20 octets et calcule à rebours, calcule $r = \left( g^k \bmod p \right) \bmod q$ et réécrit le nouveau coupon {r, k} en EPROM (ou EEPROM).

Selon une autre variante d'exécution, le procédé permet d'obtenir un chargement rapide et simultané de n coupons par l'autorité. On distingue également le cas où l'autorité génère le nombre aléatoire J de celui ou c'est la carte qui réalise cette opération :

**Cas 1 : L'autorité génère les nombres aléatoires J$_b$**

① L'autorité calcule pour b = 1 à n :

$J_b$ = nombre aléatoire de 8 octets
$i_b$ = expanse($J_b$)

$$k_b = \frac{1}{i_b} \bmod q$$

$R_b = 1$

② L'autorité calcule :

Acc = g
Pour a = 0 à 159 faire
{
Pour b = 1,à n faire si $k_b[a] == 1$ alors $R_b = R_b$ Acc modq
Acc = $Acc^2$ mod p
}
Pour b = 1 à n : $coupon_b = \{R_b \bmod q, J_b\}$

③ L'autorité envoie les n coupons à la carte.

**Cas 2 : La carte génère le nombre aléatoire J**

① La carte génère un nombre aléatoire J, l'enregistre en EPROM (ou EEPROM) et l'envoie à l'autorité
② L'autorité calcule pour b = 1 à n :

$$k_b = \frac{1}{SHA(x, J, b)} \bmod q$$

$R_b = 1$
③ L'autorité calcule :

Acc = g
Pour a = 0 à 159 faire
{
Pour b = 1 à n faire si $k_b[a] == 1$ alors $R_b = R_b$ Acc mod q
Acc = $Acc^2$ mod p
}
Pour b = 1 à n : $r_b = R_b \bmod q$

④ L'autorité envoie les valeurs $r_b$ des n coupons à la carte qui les enregistre en EPROM (ou EEPROM) à la suite de J.

L'invention proposée permet en outre de contrôler de l'utilisation des coupons basée sur la notion de certification. L'autorité calcule un certificat pour un ensemble de coupons au moment de leur chargement et le transmet, avec les données ayant permis son calcul à la carte :
La carte envoie J à l'autorité qui calcule les $k_i$ et les $r_i$, avec n le nombre de coupons à charger, de la façon suivante :
Pour i = 1 à n :

$$k_i = \frac{1}{SHA(x, J, i)} \bmod q$$

$$r_i = \left( g^{k_i} \bmod p \right) \bmod q$$

Puis l'autorité calcule le Certificat des n coupons : elle génère un nombre aléatoire K et calcule R=g$^K$ mod p mod q et $S = \dfrac{M + XR}{K} \bmod q$ avec M = Haché (Donnée_Contrôle, $r_1$, $r_2$, ..., $r_n$).

Il est possible de limiter le nombre de données à envoyer en organisant les coupons en arbre binaire de façon connue par l'homme de l'art Le choix de la méthode de hachage par l'homme de l'art dépendra donc essentiellement de la façon dont il souhaite organiser les données et des gains possibles au niveau du rapport temps de transmission sur temps de calcul qu'il désire obtenir.

Enfin l'autorité envoie le Certificat (R,S) les données de contrôle et les $r_i$ à la carte qui enregistre le tout en EPROM (ou EEPROM).

Pour de nombreux objets portables tels que les cartes PCMCIA, les *notebooks,* ou encore dans le cadre des applications autour des *super data highways,* le temps de transmission des données est négligeable en regard de celui consacré au calcul d'une exponentiation modulaire. De ce fait, l'invention proposée offre d'intéressantes possibilités de gain de performances que l'état actuel de l'art ne permet pas.

**Revendications**

1. Procédé de génération de signatures numériques de type DSA à partir d'appareils portables A1, A2, Ai...An de type carte à circuit intégré micro-processeur, comportant des moyens de calculs, de communication et de rétention de données, lesquels comprennent au moins une mémoire non volatile programmable électriquement, ci-après dénommée EEPROM, dans laquelle est inscrite une clé-carte propre à chaque carte et représentant la clé de l'algorithme DES, ce procédé comportant les étapes suivantes:

   - préparation de données chiffrées constituant des coupons J,r ou J,x,
   - chargement de ces coupons dans les mémoires non volatiles,
   - et utilisation de ces coupons pour signer un message reçu d'une autorité centrale certifiée B ou vérifieur,

   la préparation étant réalisée à partir d'un nombre aléatoire J tiré par cette autorité B ou par la carte, stocké sous une forme réduite de Z1 octets, et exploité dans les calculs sous forme d'un nombre i obtenu par expansion de J sur Z2 octets.

2. Procédé de génération de signatures numériques selon la revendication 1, selon lequel la préparation des coupons est réalisée par l'autorité centrale certifiée ou vérifieur ayant des moyens de calcul, et établissant périodiquement des sessions individuelles avec les appareils Ai, par le biais d'une interface de communication commune, afin d'envoyer à chaque appareil des données chiffrées et pré-calculées qui permettront à chaque appareil de générer rapidement une signature numérique ou de participer à une session d'authentification par un protocole à clé publique.

3. Procédé de génération de signatures numériques selon la revendication 1 ou 2, **caractérisé en ce que** le protocole à clé publique est réalisé par l'algorithme DSA et où l'échange de données entre l'appareil Ai et l'autorité certifiée B comporte au moins les étapes suivantes:

   l'autorité B tire l'aléa J de Z1 octets, en produit une expansion i sur Z2 octets,
   calcule c = DES(clé_carte, J), calcule k = (1/i) mod q, calcule r = (g$^k$ mod p) mod q,
   et envoie c et r à la carte qui calcule J = DES$^{-1}$(clé_carte, c) et sauvegarde J et r en mémoire non volatile EEPROM.

4. Procédé selon l'une quelconque des revendications 1 à 3, **caractérisé en ce que** l'opération de chargement de J et r en EEPROM est répétée t fois afin d'aboutir à la sauvegarde de t couples différents {J, r} en EEPROM.

5. Procédé selon l'une quelconque des revendications 1 à 4, dans lequel les appareils portables sont des cartes, **caractérisé en ce que** le paramètre clé_carte est dérivé directement de x, la clé secrète DSS détenue par la carte.

6. Procédé selon l'une quelconque des revendications 1 à 4, **caractérisé en ce que** l'algorithme DES utilisé dans le calcul est remplacé par un OU exclusif avec une clef constante.

**7.** Procédé selon l'une quelconque des revendications 1 à 4, **caractérisé en ce que** la carte Ai génère une signature DSA d'un message m en effectuant au moins les opérations suivantes:

    a. Extraire J et r de la mémoire EEPROM
    b. Produire une expansion i de J sur Z2 octets
    c. Calculer s = (m+x r) i mod q
    d. Envoyer s et r au vérifieur
    e. Invalider le couple (J, r) en l'effaçant de l'EEPROM.

**8.** Procédé selon la revendication 1, **caractérisé en ce que** le protocole à clé publique est réalisé par l'algorithme de signature numérique DSA et **en ce que** l'échange de données entre la carte Ai et l'autorité certifiée B comporte au moins les étapes suivantes:

    Ai tire un aléa J de Z1 octets et l'envoie à l'autorité,
    l'autorité calcule $k = (1/SF1A(x,J))$ mod q et $r = (g^k$ mod p) mod q, et
    l'autorité envoie r à la carte qui enregistre J et r dans l'EEPROM.

**9.** Procédé selon la revendication 8, **caractérise en ce que** la carte Ai génère une signature DSA d'un message m en effectuant au moins les opérations suivantes:

    a. Extraire J et r de la mémoire EEPROM
    b. Calculer s = (m + x r) SHA(X, J) mod q
    c. Envoyer r et s au vérifieur
    d. Invalider le couple {J, r} en l'effaçant de l'EEPROM.

**10.** Procédé selon les revendications 1 et 8, **caractérisé en ce que** pour réduire le temps de génération d'une signature DSA avec une carte pourvue d'un opérateur cryptographique, on repousse le calcul du terme $r = (g^k$ mod p) mod q au moment de la vérification, ce qui permet de calculer r pendant le temps de travail du vérifieur.

**11.** Procédé selon la revendication 10, **caractérisé en ce que** la carte extrait J et r de l'EEPROM, produit une expansion i de J sur Z2 octets, reçoit le message m de la part du vérifieur, calcule s = (m + x r) i mod q, envoie s et r au vérifieur et invalide le couple {r, s} en l'effaçant de l'EEPROM, et **en ce que**, pendant que le vérifieur vérifie la validité du couple {r, s}, la carte tire un nouveau nombre aléatoire J de Z1 octets, en produit une expansion i sur Z2 octets, calcule à rebours k = (1/i) mod q, calcule $r = (g^k$ mod p) mod q, et réécrit le nouveau coupon {r, J} en EEPROM.

**12.** Procédé de génération de signatures numériques selon la revendication 1 ou 2, **caractérisé en ce que**, pour obtenir le chargement rapide et simultané de n coupons DSS par l'autorité, les étapes suivantes sont réalisées:

    a. L'autorité calcule pour b =1 à n :

    $J_b$ = nombre aléatoire de 20 octets
    $i_b$ = expansion de $J_b$
    $k_b = (1/i_b)$ mod q
    $R_b = 1$

    b. L'autorité calcule:

    Acc=g
    Pour a = 0 à 159 faire
    {
    Pour b = 1 à n faire si $k_b[a]==1$ alors $R_b = P_b$ Acc mod q Acc= $Acc^2$ mod p
    }
    Pour b = 1 à n : $coupon_b = \{R_b$ mod q, $J_b\}$

    c. L'autorité envoie les n coupons aux cartes.

**13.** Procédé de génération de signatures numériques selon la revendication 1, **caractérisé en ce que** le chargement rapide et simultané de n coupons de type DSA par l'autorité comporte les étapes suivantes:

a. La carte génère un nombre aléatoire J, l'enregistre en EEPROM et l'envoie à l'autorité

b. L'autorité calcule, pour b = 1 à n :

$k_b$ = (1/SHA(x, J, b)) mod q et pose $R_b$=1

c. L'autorité calcule:

Acc=g

Pour a = 0 à 159 faire

{

Pour b = 1 à n faire si $k_b$ [ a]=1 alors $R_b=R_b$ Acc mod q

Acc = $Acc^2$ mod p

}

Pour b =1 à n : $r_p=R_b$ mod q

d. L'autorité envoie les n coupons $r_1,...,r_n$ aux cartes.

**14.** Procédé de génération de signatures numériques selon la revendication 1 ou 2, **caractérisé en ce que**, pour obtenir un chargement rapide et simultané de n coupons dans le cas où ces coupons sont obtenus au moyen d'un algorithme de Schnorr par l'autorité, on réalise les étapes suivantes:

a. La carte génère un nombre aléatoire J, l'enregistre en EEPROM et l'envoie à l'autorité

b. L'autorité calcule, pour b = 1 à n :

$temp_b$ = SHA(s,J,i)mod q

$x_b$= 1

c . L'autorité calcule:

Acc=a

Pour a =0 à 159 faire

{

Pour b = 1 à n faire si $temp_b$[a]==1 alors $x_b==x_b$ Acc mod q

Acc = $Acc^2$ mod p

}

d. L'autorité envoie les n coupons $x_1,...,x_n$ aux cartes.

**15.** Procédé de génération de signatures numériques selon la revendication 13. **caractérisé en ce que** la carte Ai génère une signature DSA d'un message m en effectuant au moins les opérations suivantes:

a. Extraire J et un $r_b$ de la mémoire EEPROM

b. Calculer s = (m + x $r_b$) SHA(x, J, b) mod q

c. Envoyer $r_b$ et s au vérifieur

d. Invalider le coupon $r_b$ en l'effaçant de l'EEPROM.

**16.** Procédé de génération de signatures numériques selon la revendication 13, **caractérisé en ce que** la carte Ai génère une signature Schnorr d'un message m en effectuant au moins les opérations suivantes:

a. Extraire J et un $x_b$ de l'EEPROM

c. Calculer e = SHA(m, s) mod q

d. Calculer y = SHA(s, J, b) + se mod q

e. Envoyer $x_b$ et y au vérifieur

f. Invalider le coupon {$x_b$} en l'effaçant de l'EEPROM.

**17.** Procédé de génération de signatures numériques selon l'une quelconque des revendications 1 à 16, **caractérisé en ce que** la préparation des données chiffrées constituant les coupons comporte en outre l'étape suivante:

- pour un ensemble de n coupons, calcul d'un certificat (R,S) à partir d'un algorithme DSS et de données de contrôle, tel que: (R,S) = DSS [SHA(Donnée_Contrôle,$r_1,r_2,...,r_a$)].

**18.** Procédé de génération de signatures numériques selon la revendication 17, dans lequel l'autorité calcule le certificat pour un ensemble de n coupons, **caractérisé en ce que** la génération et le chargement des coupons comporte alors les étapes suivantes:

(1) La carte tire un nombre aléatoire J de Z1 octets, où Z1 est par exemple égal à 8, et l'enregistre en EEPROM
(2) la carte envoie J à l'autorité
(3) L'autorité calcule les ki pour i = 1 à n, avec n le nombre de coupons à charger, et les $r_i$ correspondants, de la façon suivante:

Pour i = 1 à n :
$k_i = (1/SHA(x, J,i))$ mod q
$ri = (g^{ki}$ mod p) mod q

(4) L'autorité calcule le Certificat (R,S) correspondant aux n coupons: X étant la clef secrète de l'autorité

(1) L'autorité génère un nombre aléatoire K
(2) M = Haché (Donnée_Contrôle,$r_1$,$r_2$ ...$r_n$)
(3) $R = (g^k$ mod p) mod q
(4) $S = ((M + XR)/K)$ mod q
(5) L'autorité envoie le Certificat (R,S), les données de contrôle et les $r_i$ à la carte
(6) La carte enregistre le Certificat (R,S), les données de contrôle et les $r_i$ en EEPROM.

**19.** Procédé de génération de signatures numériques selon la revendication 17, **caractérisé en ce que** la signature d'un message m par la carte comporte les étapes suivantes:

(1) La carte extrait J et un $r_i$ de l'EEPROM
(2) La carte reçoit le message m de la part du vérifieur
(3) La carte calcule $s = (m + x r_i)$ SHA(x, J, i) mod q
(4) La carte envoie s, $r_i$, le Certificat et les données nécessaires à sa vérification au vérifieur et invalide $r_i$ en l'effaçant de l'EEPROM.

**20.** Procédé de génération de signatures numériques selon l'une quelconque des revendications précédentes, **caractérisé en ce** les appareils {Ai} sont des cartes à puce, des cartes PCMCIA, des badges, des cartes sans contact ou tout autre appareil portable.

**21.** Procédé de génération de signatures numériques selon l'une quelconque des revendications précédentes, **caractérisé en ce que** la communication entre chaque appareil Ai, et/ou l'autorité certifiée B et/ou le vérifieur de la signature est réalisée par un échange de signaux électroniques.

**22.** Procédé de génération de signatures numériques selon l'une quelconque des revendications précédentes, **caractérisé en ce que** la communication entre chaque appareil Ai, et/ou l'autorité certifiée B et/ou le vérifieur de la signature est réalisée par un échange d'ondes radio ou de signaux infrarouges.


**Claims**

**1.** Method of generating DSA digital signatures from portable devices A1, A2, Ai, ..., An of the type with a microprocessor chip, comprising means for calculation, communication and data storage, which comprise at least one electronically programmable read-only memory, hereinafter referred to as EEPROM, in which a card-key is registered, which is specific to each card and represents the key of the DES algorithm, this method including the following steps:

- preparation of encrypted data constituting the coupons J,r or J,x,
- loading these coupons in the non-volatile memories,
- and using these coupons to sign a message received from a certified central authority B or a verifier,

the preparation being carried out based on a random number J obtained by this authority B or by the card, stored in a compressed form with Z1 bytes, and used in the calculations in the form of a number i obtained by expansion of J to Z2 bytes.

2. Method of generating digital signatures according to claim 1, according to which the preparation of the coupons is carried out by the certified central authority or verifier equipped with calculation means, and regularly setting up individual sessions with the devices Ai by means of a shared communication interface, in order to send encrypted and pre-calculated data to each device, which will allow each device to quickly generate a digital signature or to participate in an authentication session using a public-key protocol.

3. Method of generating digital signatures according to claim 1 or 2, **characterised in that** the public-key protocol is implemented by the DSA algorithm and in which the data exchange between the device Ai and the certified authority B comprises at least the following steps:

the authority B obtains the random number J with Z1 bytes and expands it i to Z2 bytes,
the authority calculates c = DES (card_key, J), calculates k = (l/i) mod q, calculates r = ($g^k$ mod p) mod q, and sends c and r to the card, which calculates J = $DES^{-1}$ (card_key, c) and saves J and r in the EEPROM non-volatile memory.

4. Method according to any one of the claims from 1 to 3, **characterised in that** the operation of loading J and r in the EEPROM is repeated t times so as to finally save t different couples {J, r} in the EEPROM.

5. Method according to any one of the claims from 1 to 4, **characterised in that** the portable devices are cards, **characterised in that** the card_key parameter is derived directly from x, the DSS secret key contained in the card.

6. Method according to any one of the claims from 1 to 4, **characterised in that** the DES algorithm used in the calculation is replaced by an exclusive OR with a constant key.

7. Method according to any one of the claims from 1 to 4, **characterised in that** the card Ai generates a DSA signature of a message m by performing at least the following operations:

a. Extracting J and r from the EEPROM memory
b. Producing an expansion i of J to Z2 bytes
c. Calculating s = (m + x r) i mod q
d. Sending s and r to the verifier
e. Disabling the couple {J, r} by deleting it from the EEPROM.

8. Method according to claim 1, **characterised in that** the public-key protocol is implemented by the digital signature algorithm (DSA), and **in that** the data exchange between the card Ai and the certified authority B comprises at least the following steps:

Ai obtains a random number J with Z1 bytes and sends it to the authority,
the authority calculates k = (1 / SHA (x,J)) mod q and r = ($g^k$ mod p) mod q, and
the authority sends r to the card, which saves J and r in the EEPROM.

9. Method according to claim 8, **characterised in that** the card Ai generates a DSA signature of a message m by performing at least the following operations:

a. Extracting J and r from the EEPROM memory
b. Calculating s = (m + x r) i mod q
c. Sending s and r to the verifier
d. Disabling the couple {J, r} by deleting it from the EEPROM.

10. Method according to claims 1 and 8, **characterised in that**, in order to reduce the time it takes to generate a DSA signature using a card equipped with a cryptographic operator, the calculation of the term r = ($g^k$ mod p) mod q is postponed until the time of verification, which makes it possible to calculate r during the working time of the verifier.

11. Method according to claim 10, **characterised in that** the card extracts J and r from the EEPROM, produces an expansion i of J to Z2 bytes, receives the message m from the verifier, calculates s = (m +x r) i mod q, sends s and r to the verifier and disables the couple {r, J} by deleting it from the EEPROM, and **in that**, while the verifier is verifying the validity of the couple {r, s}, the card obtains a new random number J with Z1 bytes, produces an expansion of this number i to Z2 bytes, back-calculates k = (l/i) mod q, calculates r = ($g^k$ mod p) mod q, and re-writes the new coupon {r, J} in the EEPROM.

**12.** Method of generating digital signatures according to claim 1 or 2, **characterised in that**, in order to obtain quick, simultaneous loading of n DSS coupons by the authority, the following steps are carried out:

    a. The authority calculates the following for b = 1 to n:

$J_b$ = random number with 20 bytes
$i_b$ = expansion of $J_b$
$k_b = (1/i_b) \bmod q$
$R_b = 1$

    b. The authority calculates:

Acc = g
For a = 0 to 159 do
{
For b = 1 to n do if $k_b[a] == 1$ then $R_b = R_b$
Acc mod q
Acc = $Acc^2 \bmod p$
}
For b = 1 to n: $coupon_b = \{R_b \bmod q, J_b\}$

    c. The authority sends the n coupons to the card.

**13.** Method of generating digital signatures according to claim 1, **characterised in that** the quick, simultaneous loading of n DSA-type coupons by the authority consists of the following steps:

    a. The card generates a random number J, saves it in the EEPROM and sends it to the authority
    b. The authority calculates the following for b = 1 to n:
$k_b = (1 / SHA(x, J, b) \bmod q$ and adds $R_b = 1$
    c. The authority calculates:

Acc = g
For a = 0 to 159 do
{
For b = 1 to n do if $k_b[a] == 1$ then $R_b = R_b$
Acc mod q
Acc = $Acc^2 \bmod p$
}
For b = 1 to n: $R_b = R_b \bmod q$

    d. The authority sends the n coupons $r_1,..., r_n$ to the cards.

**14.** Method of generating digital signatures according to claim 1 or 2, **characterised in that**, in order to obtain quick, simultaneous loading of n coupons in cases in which these coupons are obtained by the authority using a Schnorr algorithm, the following steps are carried out:

    a. The card generates a random number J, saves it in the EEPROM and sends it to the authority
    b. The authority calculates the following for b = 1 to n:
$temp_b = SHA(x, J, i) \bmod q$
$X_b = 1$
    c. The authority calculates:

Acc = a
For a = 0 to 159 do
{
For b = 1 to n do if $temp_b[a] == 1$ then $x_b =$

$X_b$ Acc mod q
Acc = $Acc^2$ mod p
}

d. The authority sends the n coupons $x_1$, ..., $x_n$ to the cards.

**15.** Method of generating digital signatures according to claim 13, **characterised in that** the card Ai generates a DSA signature for a message m by performing at least the following operations:

a. Extracting J and an $r_b$ from the EEPROM memory
b. Calculating s = (m + x $r_b$) SHA (x, J, b) mod q
c. Sending $r_b$ and s to the verifier
d. Disabling the coupon $r_b$ by deleting it from the EEPROM.

**16.** Method of generating digital signatures according to claim 13, **characterised in that** the card AI generates a Schnorr signature of a message m by performing at least the following operations:

a. Extracting J and an $x_b$ from the EEPROM
b. Calculating e = SHA (m, s) mod q
c. Calculating y = SHA (s, J, b) + se mod q
d. Sending $X_b$ and y to the verifier
e. Disabling the coupon {$X_b$} by deleting it from the EEPROM.

**17.** Method of generating digital signatures according to any one of the claims from 1 to 16, **characterised in that** the preparation of the encrypted data the make up the coupons also comprises the following step:

- for a set of n coupons, calculating a certificate (R, S) based on a DSS algorithm and control data, such that:
(R, S) = DSS [SHA (Control_Data, $r_1$, $r_2$, ..., $r_n$)].

**18.** Method of generating digital signatures according to claim 17, in which the authority calculates the certificate for a set of n coupons, **characterised in that** the generation and loading of the coupons then comprises the following steps:

(1) The card obtains a random number J with Z1 bytes, where Z1 is, for example, equal to 8 bytes, and saves it in the EEPROM
(2) The card sends J to the authority
(3) The authority calculates the $k_i$ for i = 1 to n, where n is.the number of coupons to be loaded, and the corresponding $r_i$, as follows:

For i = 1 to n:
$k_i$ = (1 / SHA (x, J, i) mod q
$r_i$ = ($g^{ki}$ mod p) mod q

(4) The authority calculates the Certificate (R, S) that corresponds to the n coupons:

If X is the secret key of the authority

(1) The authority generates a random number K
(2) M = Hashed (Control_Data, $r_1$,$r_2$,...,$r_n$)
(3) R = ($g^k$ mod p) mod q
(4) S = ((M + XR) /K) mod q
5. The authority sends the Certificate (R, S), the control data and the $r_i$ to the card
6. The card saves the Certificate (R, S), the control data and the $r_i$ in the EEPROM.

**19.** Method of generating digital signatures according to claim 17, **characterised in that** the signature of a message m by the card comprises the following steps:

(1) The card extracts J and an $r_i$ from EEPROM
(2) The card receives the message m from the verifier

(3) The card calculates s = (m + x r) SHA (x, J, i) mod q

(4) The card sends s, $r_i$, the Certificate and the data required to verify it to the verifier and disables $r_i$ by deleting it from the EEPROM.

**20.** A method of generating digital signatures according to any one of the preceding claims, **characterised in that** the devices {Ai} are chip cards, PCMCIA cards, swipe cards, contactless cards or any other portable device.

**21.** Method of generating digital signatures according to any one of the preceding claims, **characterised in that** the communication between each device Ai and/or the certified authority B and/or the verifier of the signature takes place by means of an exchange of electronic signals.

**22.** Method of generating digital signatures according to any one of the preceding claims, **characterised in that** the communication between each device Ai and/or the certified authority B and/or the verifier of the signature takes place by means of an exchange of radio waves or infrared signals.

**Patentansprüche**

**1.** Verfahren zur Generierung digitaler Signaturen vom Typ DSS ausgehend von tragbaren Geräten A1, A2, Ai... An vom Typ Chipkarte mit Mikroprozessor, die Rechenmittel, Kommunikations- und Datenspeicherungsmittel umfassen, welche mindestens einen elektrisch programmierbaren, nicht flüchtigen Speicher enthalten, nachstehend EEPROM genannt, in den ein Kartenschlüssel der Karte geschrieben wird und welcher der Schlüssel des Algorithmus DES ist. Dieses Verfahren besteht aus folgenden Schritten:

- Vorbereitung verschlüsselter Daten, die die Coupons J, r oder J,x bilden.
- Laden dieser Coupon in die nicht flüchtigen Speicher,
- und Benutzung dieser Coupons zum Signieren einer Nachricht, die von einer Zertifizierungsstelle B oder einem Prüfer gesendet wurde.

Die Vorbereitung erfolgt ausgehend von einer Zufallszahl J, die von dieser Zertifizierungsstelle B oder von der Karte gezogen wird und in reduzierter Form mit Z1 Bytes gespeichert wird, die in den Berechnungen in Form einer Zahl i, die durch Expansion von J auf Z2 Bytes erhalten wurde, ausgewertet wird.

**2.** Verfahren zur Generierung digitaler Signaturen gemäß Patentanspruch 1, nach dem die Vorbereitung der Coupons durch die Zertifizierungsstelle oder den Prüfer erfolgt, die oder der die Rechnungsmittel hat, und die oder der regelmäßig Einzelsitzungen mit den Geräten Ai über eine gemeinsame Kommunikationsschnittstelle einrichtet, um an jedes Gerät verschlüsselte und vorausberechnete Daten zu senden, mit denen jedes Gerät schnell eine digitale Signatur generieren oder über ein Protokoll mit öffentlichem Schlüssel an einer Authentifizierungssitzung teilnehmen kann;

**3.** Verfahren zur Generierung digitaler Signaturen gemäß Patentanspruch 1, **dadurch gekennzeichnet, dass** das Protokoll mit öffentlichem Schlüssel durch den DSA-Algorithmus erstellt wird und in dem der Datenaustausch zwischen dem Gerät Ai und der Zertifizierungsstelle B mindestens folgende Schritte umfasst:

Die Zertifizierungsstelle B zieht die Zufallszahl J mit Z1 Bytes, erzeugt eine Expansion i mit 22 Bytes, berechnet c = DES(Schlüssel_Karte, J), berechnet k = (L/i) mod q, berechnet r = ($g^k$ mod p) mod q, und sendet c und r an die Karte, welche J = $DES^{-1}$ (Schlüssel_Karte, c) berechnet und J und r im nicht flüchtigen EEPROM-Speicher sichert.

**4.** Verfahren nach einem der Ansprüche 1 bis 3, **dadurch gekennzeichnet, dass** der Vorgang zum Laden von J und r im EEPROM t Mal wiederholt wird, bis die Speicherung von t unterschiedlichen Paaren {J, r} im EEPROM beendet ist.

**5.** Verfahren nach einem der Ansprüche 1 bis 4, in denen die tragbaren Geräte Karten sind, **dadurch gekennzeichnet, dass** der Parameter Schlüssel_Karte direkt von x, dem geheimen DSS-Schlüssel, den die Karte hat, abgeleitet wird.

**6.** Verfahren nach einem der Ansprüche 1 bis 4, **dadurch gekennzeichnet, dass** der bei der Berechnung benutzte Algorithmus DES ersetzt wird durch ein exklusives ODER mit einem konstanten Schlüssel.

7. Verfahren nach einem der Ansprüche 1 bis 4, **dadurch gekennzeichnet, dass** die Karte Ai eine DSA-Signatur einer Nachricht m generiert, indem sie mindestens folgende Schritte durchläuft:

    a. J und r aus dem EEPROM-Speicher extrahieren
    b. Von J eine Expansion i mit Z2 Bytes erzeugen
    c. $s = (m+x\ r)\ i \bmod q$ berechnen
    d. s und r an den Prüfer senden.
    e. Das Paar {J, r} sperren, indem man es im EEPROM löscht.

8. Verfahren nach Anspruch 1, **dadurch gekennzeichnet, dass** das Protokoll mit dem öffentlichen Schlüssel über den Algorithmus der digitalen Signatur DSA erfolgt und der Datenaustausch zwischen der Karte Ai und der Zertifizierungsstelle B mindestens folgende Schritte umfasst:

    Ai zieht eine Zufallszahl J mit Z1 Bytes und sendet sie an die Zertifizierungsstelle,
    die Zertifizierungsstelle berechnet $k = (1/SHA(x,J)) \bmod q$ und $r = (g^k \bmod p) \bmod q$, und die Zertifizierungsstelle sendet r an die Karte, welche J und r im EEPROM speichert.

9. Verfahren nach Anspruch 8, **dadurch gekennzeichnet, dass** die Karte Ai eine DSA-Signatur einer Nachricht m generiert, indem sie mindestens folgende Schritte durchläuft:

    a. J und r aus dem EEPROM-Speicher extrahieren
    b. $s = (m+x\ r)SHA(x,J) \bmod q$ berechnen
    c. r und s an den Prüfer senden.
    d. Das Paar {J, r} sperren, indem es im EEPROM gelöscht wird.

10. Verfahren nach Anspruch 1 und 8, **dadurch gekennzeichnet, dass** zur Verkürzung der Zeit zur Generierung einer DSA-Signatur mit einer Karte, die mit einem kryptographischem Operator versehen ist, die Berechung von $r = (g^{\ k} \bmod p) \bmod q$ auf den Zeitpunkt der Prüfung verschoben wird, was die Berechnung von r in der Arbeitszeit des Prüfers ermöglicht.

11. Verfahren nach Anspruch 10, **dadurch gekennzeichnet, dass** die Karte J und r aus dem EEPROM extrahiert, von J eine Expansion mit Z2 Bytes erzeugt, die Nachricht m vom Prüfer empfängt, $s = (m+x\ r)\ i \bmod q$ berechnet, s und r an den Prüfer sendet und das Paar {r, J} sperrt, indem es dasselbe aus dem EEPROM-Speicher löscht, und **dadurch gekennzeichnet, dass** während der Prüfung der Gültigkeit des Paars {r, s} durch den Prüfer die Karte erneut eine Zufallszahl J mit Z1 Bytes zieht, eine Expansion mit Z2 Bytes erzeugt, $k = (l/i) \bmod q$ überprüft, $r = (gk \bmod p) \bmod q$ berechnet und den neuen Coupon {r, J} in den EEPROM schreibt.

12. Verfahren zur Generierung digitaler Signaturen nach Patentanspruch 1 oder 2, **dadurch gekennzeichnet, dass** zur Erzielung des schnellen und gleichzeitigen Ladens von n Coupons DSS durch die Zertifizierungsstelle folgende Schritte durchlaufen werden:

    a. Die Zertifizierungsstelle berechnet für b = 1 bis n

    $J_b$ = Zufallszahl mit 20 Bytes
    $i_b$ = Expansion von $J_b$
    $K_b = (1/i_b) \bmod q$
    $R_b = 1$

    b. Die Zertifizierungsstelle berechnet:

    Acc = g
    Für a = 0 bis 159
    {
    Für b = 1 bis n falls $k_b\ [a] == 1$ dann $R_b = R_b$ Acc mod q
    Acc = Acc 2 mod p
    }
    Für b = 1 bis n : $Coupon_b = \{R_b \bmod q, J_b\}$

c. Die Zertifizierungsstelle sendet die n Coupons an die Karte.

**13.** Verfahren zur Generierung digitaler Signaturen nach Patentanspruch 1, **dadurch gekennzeichnet, dass** das schnelle und gleichzeitige Laden von n Coupons vom Typ DSA durch die Zertifizierungsstelle folgende Schritte umfasst:

a. Die Karte generiert eine Zufallszahl J, speichert sie im EEPROM und sendet sie an die Zertifizierungsstelle
b. Die Zertifizierungsstelle berechnet für b = 1 bis n:

$k_b = (1/SHA(x,J,b))$ mod q und stellt die Gleichung
$R_b = 1$ auf

c. Die Zertifizierungsstelle berechnet:

Acc = g
Für a = 0 bis 159
{
Für b = 1 bis n falls $k_b$ [a] == 1 dann $R_b = R_b$ Acc mod q
Acc = $Acc^2$ mod p
}
Für b = 1 bis n : $r_b = R_b$ mod q

d. Die Zertifizierungsstelle sendet n Coupons $r_1$, ..., $r_n$ an die Karten.

**14.** Verfahren zur Generierung digitaler Signaturen nach Patentanspruch 1 oder 2, **dadurch gekennzeichnet, dass** zum Ermöglichen des schnellen und gleichzeitigen Ladens von n Coupons in Fällen, in denen diese Coupons über einen Schnorr-Algorithmus von der Zertifizierungsstelle erhalten werden, folgende Schritte durchlaufen werden:

a. Die Karte generiert eine Zufallszahl J, speichert sie im EEPROM und sendet sie an die Zertifizierungsstelle
b. Die Zertifizierungsstelle berechnet für b = 1 bis n:

$Zeit_b = SHA(s,J,i)$ mod q
$x_b = 1$

c. Die Zertifizierungsstelle berechnet:

Acc = a
Für a = 0 bis 159
{
Für b = 1 bis n falls $Zeit_b$ [a] == 1 dann $x_b = x_b$
Acc mod q
Acc = $Acc^2$ mod p
}

d. Die Zertifizierungsstelle sendet n Coupons $r_1$, ..., $r_n$ an die Karten.

**15.** Verfahren zur Generierung digitaler Signaturen nach Patentanspruch 13, **dadurch gekennzeichnet, dass** die Karte Ai eine DSA-Signatur einer Nachricht m generiert, indem sie mindestens folgende Vorgänge durchläuft:

a. J und $r_b$ aus dem EEPROM-Speicher extrahieren
c. $s = (m+x\, r_b)SHA(x,J,b)$ mod q berechnen
d. $r_b$ und s an den Prüfer senden.
e. Den Coupon n sperren, indem er im EEPROM gelöscht wird.

**16.** Verfahren zur Generierung digitaler Signaturen nach Patentanspruch 13, **dadurch gekennzeichnet, dass** die Karte Ai eine Schnorr-Signatur einer Nachricht m generiert, indem sie mindestens folgende Vorgänge durchläuft:

a. J und $x_b$ aus dem EEPROM-Speicher extrahieren

c. $e = SHA(m,s) \bmod q$ berechnen

d. $y = SHA(s,J,b) + se \bmod q$ berechnen

d. $x_b$ und $y$ an den Prüfer senden.

f. Den Coupon $\{x_b\}$ sperren, indem er im EEPROM gelöscht wird.

**17.** Verfahren zur Generierung digitaler Signaturen nach einem der Patentansprüche 1 bis 16, **dadurch gekennzeichnet, dass** die Vorbereitung der bezifferten Daten, welche die Coupons bilden, einen weiteren Schritt umfasst:

- Für eine Reihe von n Coupons Berechnung eines Zertifikats (R, S) ausgehend von einem DSS-Algorithmus und Kontrolldaten, wie z..B.: $(R,S) = DSS [SHA(Daten\_Kontrolle, r_1, r_2,..., r_n)$ .

**18.** Verfahren zur Generierung digitaler Signaturen nach Patentanspruch 17, in dem die Zertifizierungsstelle das Zertifikat für n Coupons berechnet, **dadurch gekennzeichnet, dass** Generierung und Laden der Coupons folgende Schritte umfassen:

(1) Die Karte zieht eine Zufallszahl J mit Z1 Bytes, wobei Z1 z.B. gleich 8 ist, und speichert sie im EEPROM.

(2) Die Karte sendet J an die Zertifizierungsstelle

(3) Die Zertifizierungsstelle berechnet die $k_i$ für i = 1 bis n, wobei n die Anzahl der zu ladenden Coupons ist, sowie die entsprechenden $r_i$, auf folgende Weise:

Für i = 1 bis n

$k_i = (1/SHA(x,J, i)) \bmod q$

$r_i = (g^{ki} \bmod p) \bmod q$

(4) Die Zertifizierungsstelle berechnet das Zertifikat (R, S), das den n Coupons entspricht, wobei X der geheime Schlüssel der Zertifizierungsstelle ist:

(1) Die Zertifizierungsstelle generiert eine Zufallszahl K

(2) $M = Hash (Daten\_Kontrolle, r_1, r_2, ..,r_n)$

(3) $R = (g^k \bmod p) \bmod q$

(4) $S = ( (M+XR) /K \bmod q$

(5) Die Zertifizierungsstelle sendet das Zertifikat (R, S), die Kontrolldaten und die $r_i$ an die Karte

(6) Die Karte speichert das Zertifikat (R, S), die Kontrolldaten und die $r_i$ im EEPROM.

**19.** Verfahren zur Generierung digitaler Signaturen nach Patentanspruch 17, **dadurch gekennzeichnet, dass** die Signatur einer Nachricht m durch die Karte folgende Schritte umfasst:

(1) Die Karte extrahiert J und $r_i$ aus dem EEPROM

(2) Die Karte empfängt die Nachricht m vom Prüfer

(1) Die Karte berechnet $s = (m + x \cdot r_i)SHA (x, J, i) \bmod q$

(2) Die Karte sendet s und $r_i$, das Zertifikat und die zur Kontrolle erforderlichen Daten an den Prüfer und sperrt $r_i$, indem es dasselbe aus dem EEPROM löscht.

**20.** Verfahren zur Generierung digitaler Signaturen nach einem der oben genannten Patentansprüche, **dadurch gekennzeichnet, dass** die Geräte {Ai} Chipkarten, PCMCIA-Karten, Badges, kontaktlose Karten oder andere tragbare Geräte sind.

**21.** Verfahren zur Generierung digitaler Signaturen nach einem der oben genannten Patentansprüche, **dadurch gekennzeichnet, dass** die Kommunikation zwischen jedem Gerät Ai und/oder der Zertifizierungsstelle B und/oder dem Prüfer der Signatur über den Austausch elektronischer Signale erfolgt.

**22.** Verfahren zur Generierung digitaler Signaturen nach einem der oben genannten Patentansprüche, **dadurch gekennzeichnet, dass** die Kommunikation zwischen jedem Gerät Ai und/oder der Zertifizierungsstelle B und/oder dem Prüfer der Signatur über den Austausch von Funkwellen oder Infrarotsignalen erfolgt.

EP 0 656 710 B1

**17**

| Memoire | | | | 16 | C.P.U. Faible **11** |
|---|---|---|---|---|---|

Memoire

| EEPROM ou EPROM **15** | RAM **13** | ROM **14** |
|---|---|---|

Interface de Communication **10**

↔

↔

**16**

*C.P.U. Faible* **11**

Multiplication, Addition

Déchiffrement DES

Réduction modulaire

FIG 1

*C.P.U. Puissante*

Multiplication

Inversion modulaire

Exponentiation

Réduction modulaire

Chiffrement par DES

Générateur d'aléas

30

35

*Memoire*

RAM. 32

ROM 34

EEPROM ou EPROM 33

*Interface de Communication* 31

FIG 2

EP 0 656 710 B1

**AUTORITE**

tirer un aléa J de 8 octets

$i = \text{expanse}(J)$ sur 20 octets

$c = \text{DES}(\text{clé\_carte}, J)$

$k = 1 / i \bmod q$

$r = g^k \bmod p \bmod q$

envoyer r et c à la carte

**CARTE**

recevoir c et r

$J = \text{DES-1}(\text{clé\_carte}, c)$

sauvegarder {J,r} en EEPROM

**FIG 3**

**CARTE**

Recevoir m du terminal

Lire {J,r} de l'EEPROM

i = expanse(J) sur 20 octets

s = (m+xr) i mod q

Envoyer r et s au terminal

Effacer le couple {J,r}

**TERMINAL**

Envoyer le message m

Recevoir {r,s} de la carte

Tester si DSS(r,s) = OK

**FIG 4**

AUTORITE

CARTE

$k = 1 / SHA(x,J) \bmod q$

tirer un aléa J de 8 octets

$r = g^k \bmod p \bmod q$

recevoir r

envoyer r à la carte

sauvegarder {J,r} en EEPROM

FIG 5

**CARTE**

Recevoir m du terminal

Lire {J,r} de l'EEPROM

s = (m+xr) SHA(x,J) mod q

Envoyer r et s au terminal

Effacer le couple J,r

**TERMINAL**

Envoyer le message m

Recevoir {r,s} de la carte

Tester si DSS(r,s) = OK

**FIG 6**

**CARTE**

tirer un aléa J de 8 octets

sauvegarder les $r_i$
en EEPROM

**AUTORITE**

Pour i = 1 à n

$k_i = 1 / SHA(x,J,i) \bmod q$

$r_i = g^{k_i} \bmod p \bmod q$

envoyer $r_i$ à la carte

| | |
|---|---|
| x | : clef secrète |
| q | : module premier |
| J | : nombre aléatoire |
| $r_1$ | : coupon 1 |
| ... | : ... |
| $r_n$ | : coupon n |

**FIG 7**